# EUROPEAN PATENT SPECIFICATION

(11) **EP 0 597 516 B1**
(45) Date of publication and mention of the grant of the patent: **02.04.1997**
(21) Application number: 93202936.6
(22) Date of filing: 20.10.1993
(51) Int. Cl.: B62D 7/06, B62D 9/00

(54) **Compound steer conversion apparatus**
Vorrichtung zur Umwandlung einer Verbundlenkung
Appareil pour conversion d'une direction mixte

(30) Priority: 12.11.1992 US 974640; 12.11.1992 US 974440
(43) Date of publication of application: 18.05.1994
(73) Proprietor: NEW HOLLAND U.K. LIMITED, Basildon, Essex SS14 3AD (GB)
(72) Inventor: Hurlburt, Joseph C., Lancaster, PA 17603 (US)
(74) Representative: Vandenbroucke, Alberic

(56) References cited:
- GB-A- 824 904
- US-A- 3 783 966
- US-A- 5 046 577

## Description

This invention relates generally to a steering mechanism for an agricultural tractor in which the front axle is laterally shiftable in response to a steering movement of the steerable wheels and, more particularly, to a compound steer lock-out apparatus that can be utilized to convert a compound steering mechanism to a conventional automotive-type steering mechanism.

Tractors, whether used in an agricultural setting or in an industrial setting, typically include a fixed axle through which primary driving power is transferred through fixed wheels rotatably mounted on opposing ends of the fixed axle, and a steering axle having pivotally mounted steerable ground engaging wheels rotatably mounted on the opposing ends thereof to support the chassis of the tractor above the ground. Supplemental driving power is often provided through the steerable ground engaging wheels, while a steering mechanism remotely controllable by the operator from the operator's compartment selectively controls the pivotal movement of the steerable wheels relative to the steering axle.

One such steering mechanism incorporates a transversely disposed, horizontally extending hydraulic cylinder supported by the steering axle and connected to the opposing steerable wheels. This hydraulic cylinder affects pivotal movement of the steerable wheels about their respective pivotal connections to the steering axle by manipulating the pressures in the hydraulic cylinder to effect a transverse displacement of cylinder rod, causing a turning of the wheels.

Due to physical limitations relating to the range of movement of the steering mechanism and to the eventual interference between the steerable wheels and the steering axle or chassis frame, the amount of pivotal movement of the steerable wheels relative to the steering axle is limited by tire size and track setting to a given restricted turning angle. This maximum turning angle defines the minimum turning radius of the tractor for a given chassis clearance width, axle oscillation angle, wheel base length and king pin spacing. The selection of the length of the wheel base, i.e., the distance between the fixed axle and the steering axle, is a compromise between the need to minimize the turning radius and, therefore, minimize the wheel base length, and to maximize ride considerations which require longer wheel base lengths.

These conflicting wheel base requirements can be better resolved by a steering mechanism such as shown in US-A-5.046.577 which incorporates a laterally shifting front axle that is movable in response to a corresponding steering movement of the steerable wheels decreases the turning radius of the tractor for any given wheel base length. The mechanism mounting the steerable axle to the vehicle chassis must accommodate the relative lateral movement between the steering axle and the chassis and would preferably maintain the transversely extending axle in a parallel orientation as the axle and chassis move relative to one another in a generally horizontal plane.

The lateral movement of the shiftable axle is preferable automatically accomplished simultaneously and in conjunction with the steering movement imparted to the pivotable wheels by the steering mechanism. Furthermore, oversteering, which occurs when the wheels are pivoted at generally equal angles and, therefore, because of the lateral spacing of the wheels, do not end up with coinciding turning centers, is a problem with steering mechanisms that needs correction as the wheels are being steered.

It may be desirable by some operators to utilize a conventional automotive-type steering mechanism in some vehicle applications and the compound steering mechanism in other applications.

It therefore is the objective of the present invention to provide an apparatus for the compound steering mechanism that would be operable to lock-out the compound steering feature and convert the structure to operate as a conventional steering mechanism.

According to a first aspect of the present invention, a method is provided of converting a steering mechanism from a compound steering mechanism, in which an axle mounting a pair of opposing steerable wheels is laterally movable relative to a chassis from which said axle is supported by a pivotable linkage in response to a pivoting of the steerable wheels which are operatively connected to said chassis (such a compound steering mechanism is known for example from US-A-5 046 577), to a conventionally operating steering mechanism, in which the steering of said chassis is accomplished solely through the pivotal movement of said wheels relative to said axle.
The method is characterized in that it comprises the steps of:
- locking said axle against the chassis to prevent relative pivotal movement therebetween; and
- removing the operative connection between said wheels and said chassis to eliminate the actuation of the pivotal movement of said axle relative to said chassis.

According to a second aspect of the present invention, a vehicle is provided including a chassis having :
- a transversely extending steerable axle pivotally mounted to said chassis for lateral movement relative to said chassis about a generally vertically extending axis;
- a linkage pivotally supporting said steerable axle from said chassis;
- a pair of opposing steerable wheels pivotally connected to the respective transverse ends of said steerable axle;
- steering means operatively connected to said steerable wheels to control the pivotal movement thereof relative to said steerable axle; and
- connecting link means operatively associated with said steerable wheels to effect a lateral shifting of said steerable axle in response to a pivotal movement of said steerable wheels.

Such a vehicle (known from US-A-5 046 577) is characterized in that it further includes a lock-out means selectively engageable with said axle to prevent any lateral shifting thereof relative to said chassis; said lock-out means comprising means for enabling unrestricted selective pivotal movement of said steerable wheels relative to said axle to accomplish a steering operation of said vehicle.

The compound steering conversion apparatus incorporates a single conventional tie rod to replace the pair of compound steering tie rods interconnecting the pivotal axle and the chassis at connection points offset from the longitudinal centerline of the chassis. The pivotable components of the compound steering mechanism are interconnected by a fastener to prevent pivotal motion during turning movements to make the steering mechanism operate as a conventional automotive-type steering mechanism. The compound steering lock-out apparatus can be selectively installed and/or replaced to permit repeated conversions of the steering mechanism from compound steering to conventional steering. To this end, the lock-out apparatus can be packaged in a kit form for selective use as desired.

A compound steering conversion apparatus in accordance with the present invention will now be described in greater detail, by way of example, with reference to the accompanying drawings, in which :
Figure 1 is a top plan view of a front axle assembly for an agricultural tractor incorporating the principles of the instant invention, the front portion of the tractor chassis overlying the front axle assembly being shown in phantom;
Figure 2 is a cross-sectional view of the front axle assembly taken along lines 2-2 of Figure 1, the front portion of the tractor chassis being shown in phantom relative to the front axle assembly;
Figure 3 is a cross-sectional view of the tractor front axle assembly taken along lines 3-3 of Figure 1 to depict generally a front elevational view of the tractor assembly immediately rearwardly of the weights;
Figure 4 is a cross-sectional view of the front axle assembly similar to Figure 2, but with the front ballast assembly removed to better depict the linkage pivotally interconnecting the steerable axle and the vehicle chassis;
Figure 5 is a top plan view of the front axle assembly similar to the view of Figure 1, but with the front ballast assembly removed for purposes of clarity;
Figure 6 is a top plan view of the front axle assembly similar to the view of Figure 5 but with the steerable axle and steerable wheels moved to effect a right turn of the vehicle;
Figure 7 is a front elevational view of the tractor front axle assembly similar to the view of Figure 3, but with the front ballast assembly removed for purposes of clarity;
Figure 8 is a front elevational view of the front axle assembly similar to the view of Figure 7, but with the steerable axle and steerable wheels moved to effect a right hand turn of the vehicle as depicted in Figure 6;
Figure 9 is a rear elevational view of the front axle assembly taken along lines 9-9 of Figure 1 with the front ballast assembly removed for purposes of clarity and the chassis being shown in phantom;
Figure 10 is a partial side elevational view of the front axle assembly similar to the view depicted in Figure 4, but with the steerable wheels removed and with the lock-out apparatus installed to convert the compound steer into a conventionally operable steering mechanism, the lock-out bolt assembly being shown in an exploded view in phantom;
Figure 11 is a top plan view of the front axle assembly shown in Figure 10 with an alternative embodiment of the lock-out apparatus installed to convert the compound steer into a conventionally operable steering mechanism; and
Figure 12 is a rear elevational view of the front axle assembly shown in Figure 10.

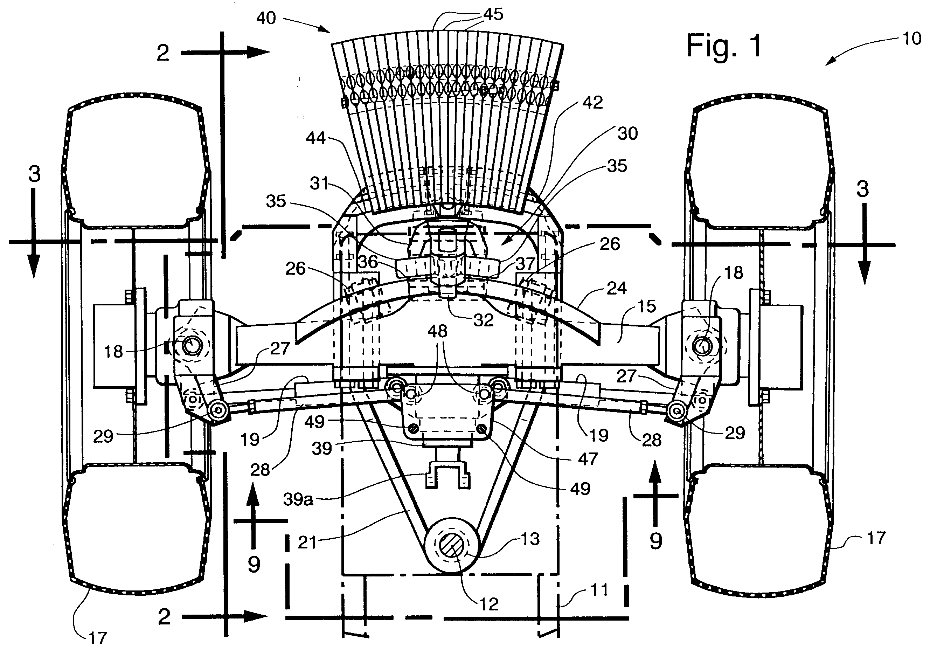

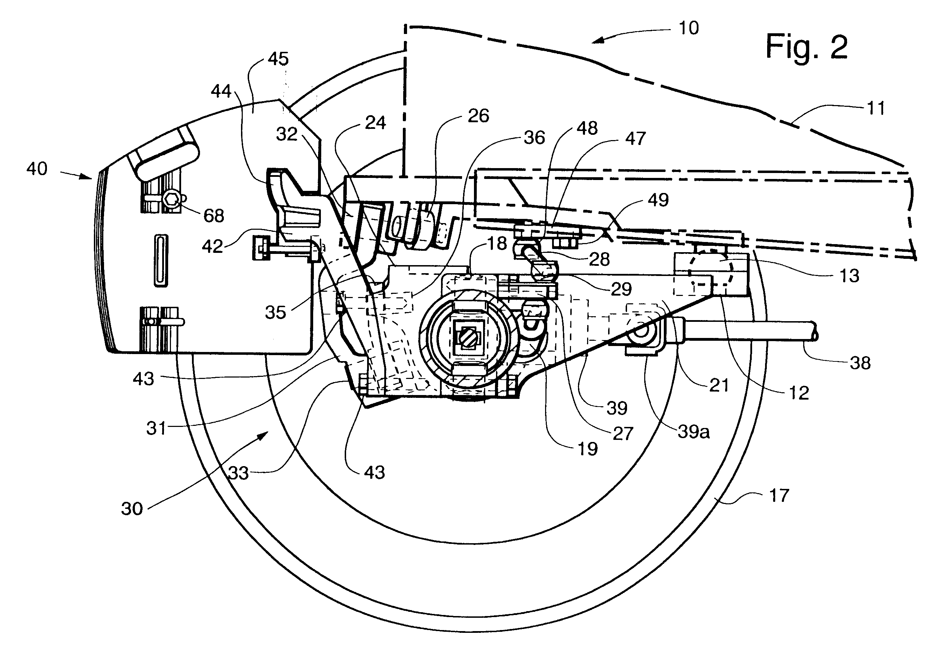

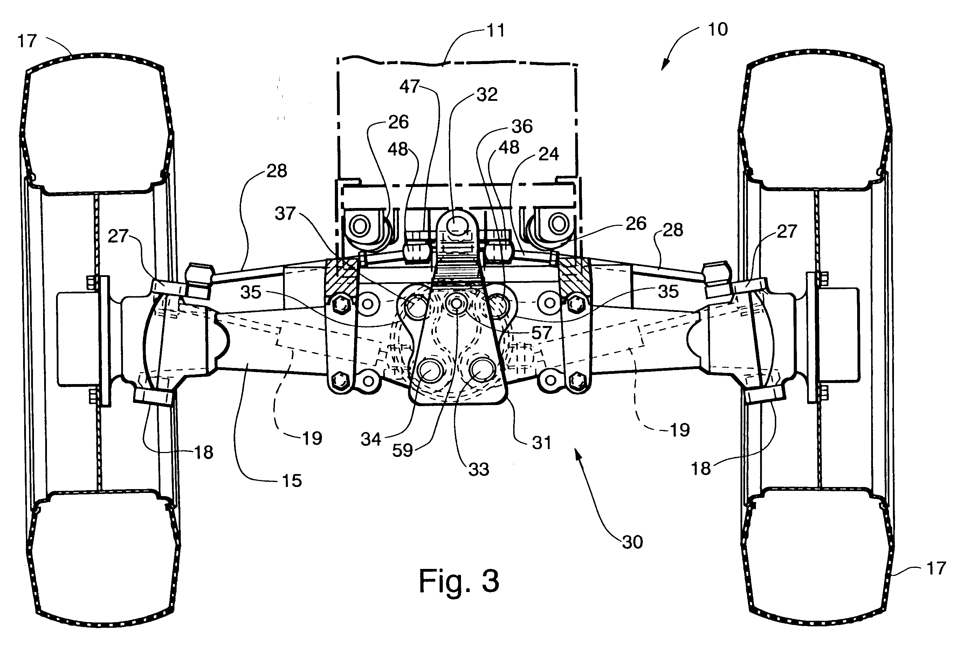

Referring now to Figures 1-3, a laterally shifting front axle assembly for an agricultural tractor or other vehicle, pivotally connected to the vehicle chassis to provide a decreased turning radius for an given wheel base, can best be seen. The front axle assembly 10 is pivotally connected to the tractor chassis 11 for pivotal movement about a generally vertical axis 12, thereby allowing the front axle assembly 10 to rotate about the pivot axis 12 and shift the front axle assembly 10 laterally relative to tractor chassis 11. The pivot axis 12 employs a spherical ball joint 13 to permit some oscillatory movement of the front axle 15 relative to the chassis 11. The details of a laterally shiftable front axle assembly to provide better turning capabilities is described in detail in US-A-5.046.577.

The front axle assembly 10 includes a transversely extending axle member 15 having pivotally mounted on the respective laterally opposing ends thereof a pair of steerable wheels 17 pivotable about respective nearly vertical king pin axes 18 to effect a steering of the wheels 17 relative to the axle member 15. A pair of hydraulic cylinders 19 interconnect the axle member 15 and the steerable wheels 17 via a steering arm 27 to control the pivotable movement of the wheels 17 relative to the axle member, and thereby, effect steering.

The front axle member 15 carries a rearwardly extending subframe member 21 which carries the vertical pivot 12 and ball joint 13 connected to the tractor chassis 11 rearwardly of the front axle member 15 yet generally positioned laterally between the front steerable wheels 17. A front yoke assembly 30 suspends the laterally shiftable front axle member 15 from the forward end of the tractor chassis 11 to permit a pivotal movement of the front axle assembly 10 relative to tractor chassis 11 about the vertical axis 12. To facilitate relative movement between the front axle assembly 10 and the tractor chassis 11 when the axle is fully oscillated, the front axle member 15 is also provided with an arcuate track 24 having a center of curvature essentially coincident with the pivot axis 12. The chassis 11 carries a pair of laterally spaced rollers 26 that are engageable with the arcuate track 24 when the front axle member 15 oscillates about a generally horizontal axis in response to changing ground contours and undulations so that the rollers 26 provide a limit to the vertical movement of the front axle member 15 relative to the tractor chassis 11 due to an engagement thereof with the arcuate track 24.

A pair of tie rods 28 interconnecting the chassis 11 and the steerable wheels 17 transmit coordinated steerable movement of the wheels 17 relative to each other and to the front axle member 15 and to a lateral shifting movement of the chassis 11 relative to the front axle 15. Although the front axle 15 is pivotally connected to the chassis 11, the front axle 15 is engaged with the ground through the wheels 17 and the actual pivotal movement results in a lateral shifting of the chassis 11. Looking at the front axle 15 from the reference frame of the chassis 11, the appearance is that the axle 15 shifts relative thereto and any reference hereinafter describing the pivotal movement of the front axle member 15 relative to the chassis is so described.

Because of the fixed length of each respective tie rod 28 interconnecting the chassis 11 and the wheels 17 at a connection point 29 spaced inwardly toward the center of the chassis 11 and rearwardly from the respective pivot axis or king pin 18 for the corresponding steerable wheel 17 by a rearwardly and inwardly extending steering arm 27, a pivotable movement of the wheel 17 about the corresponding pivot axis 18 will result in a corresponding shifting of the front axle 15 relative to the center (not shown) of a tractor chassis 11, along which the vertical pivot axis 12 is positioned.

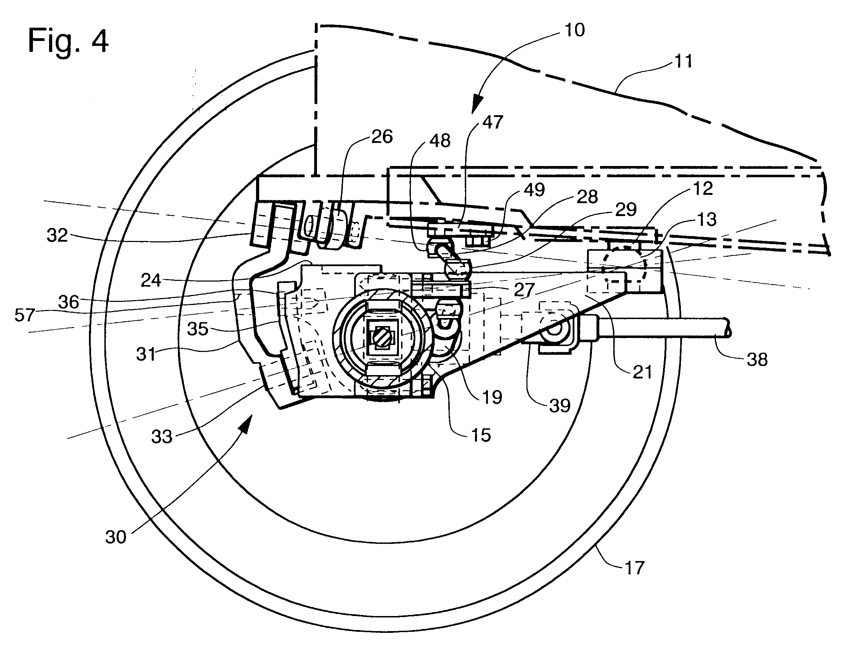

The front yoke assembly 30 has a contoured front carrier member 31 pivotally connected at a second pivot joint 32 to the chassis 11. The front carrier member 31 also carries a pair of transversely spaced third and fourth lower pivots 33, 34, respectively, for pivotally supporting a corresponding pair of dog bone-shaped links 35 which, in turn, are pivotally connected to the front axle member 15 by respective transversely spaced fifth and sixth pivots 36, 37. As depicted in Figure 4, each of the pivots 32, 33, 34, 36 and 37 associated with the front yoke assembly 30 have a corresponding pivot axis aligned with the ball joint 13, which is located on the pivot axis 12. Accordingly, the pivot axis for each of the five pivots 32, 33, 34, 36 and 37 have a nonparallel relationship intersecting a common point at the center of the ball joint 13.

As a result, the pivotal movement of the front axle assembly 10 relative to the tractor chassis 11, resulting in a lateral shifting of the front axle member 15, is accomplished through a four-bar linkage which has very little vertical component associated with the movement thereof, yet the chassis 11 maintains a substantially uniform elevation relative to the front axle 15 throughout the range of relative movement between the front steerable axle and the vehicle chassis.

The main pivot axis for lateral shifting and vertical oscillatory movement of the front axle 15 is the axis defined by the second pivot joint 32 extending through the ball joint 13, as both the pivot 32 and the ball joint 13 are fixed relative to the chassis 11. The generally transverse lines defined by the tie rods 28 extend through this main pivot axis extending through pivot 32 and ball joint 13 so that movements of the axle 15, especially oscillatory movements, causes a minimum additional steering effect to the axle 15.

As depicted in Figures 1-3, the front axle assembly 10 may be powered in a conventional manner from the transmission (not shown) carried by the tractor chassis 11 through the front wheel drive shaft 38 connected to a conventional front wheel drive mechanism 39 to operatively power the rotation of the steerable wheels 15 to facilitate movement of the tractor chassis 11 over the ground. One skilled in the art will readily realize that the provision of a front wheel drive mechanism 39 is optional and independent of the operation of the compound steering mechanism permitting a lateral shifting of the tractor chassis 11 relative to the front axle member 15. The continuous driving of the front wheels 17 during steering operation involving a lateral shifting of the tractor chassis 11 relative to the front axle member 15 can be accommodated by the universal joint 39a interconnecting the front wheel drive mechanism 39 and the drive shaft 38.

The tractor ballast assembly 40 is carried by the front axle assembly 10 intermediate of the steerable wheels 17 at a position centrally therebetween. A carrier 42 is detachably connected by fasteners 43 to the front axle member 15 to extend forwardly thereof and forwardly of the tractor chassis 11, as well. The carrier 42 is provided with an arcuate mounting ring 44 upon which individual suitcase weights 45 are supported. Since the carrier 42 moves with the front axle member 15 relative to the chassis 11, the position of the ballast assembly 40 relative to the laterally spaced front wheels 17 remains relatively fixed, thereby maintaining a substantially constant weight distribution relative to the front wheels 17. Furthermore, since the ballast assembly 40 moves with the axle member 15, the steering clearance between the pivotally movable wheels 17 and the ballast assembly 40 does not change as the front axle 15 shifts laterally and/or oscillates vertically. As a result, the operator may mount additional weight units 45 to increase the amount of ballast on the front axle 15 without decreasing the tire clearance below that which is acceptable for traditional tractors. Greater detail in the construction and assemblage of the individual weights 45 to form the ballast assembly 40 can be found in US patent US-A-5 219 180.

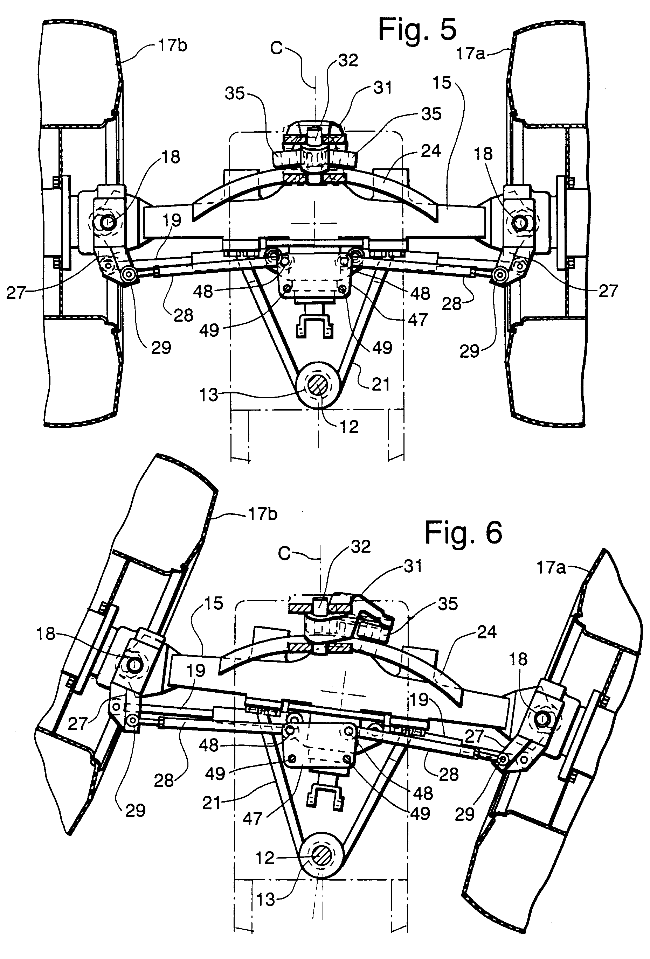

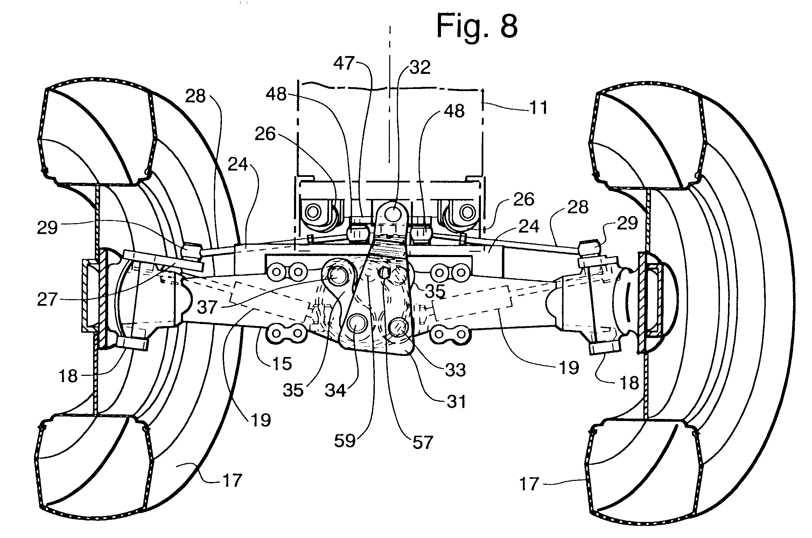

The configuration of the components of the front yoke assembly 30, chassis 11 and front steerable axle 15, as the tractor steering mechanism 19 effects a turn of the tractor chassis 11, is best seen in Figures 5 - 8. The dog-bone link members 35 diverge upwardly so that the fifth and sixth pivot joints are transversely spaced further apart than the third and fourth lower pivot joints to provide a nearly parallel planar motion of the chassis 11 relative to the axle 15 and an increased measure of stability to the assembly 30. A turning of the steerable wheels 17, as exemplified by the right turn depicted in Figures 6 and 8, causes a corresponding relative shifting between the steerable axle 15 and the chassis 11, which in the frame of reference of the chassis 11 causes a shifting of the axle 15 in the direction of the intended turn. As described above, this relative shifting of the axle 15 shortens the turning radius and allows the tractor to make a tighter turn.

During such a turn, the tie rods 28 force the chassis 11 in the opposite direction from which the turn is being made, which in the frame of reference of the chassis 11 causes a relative movement of the axle 15 about the first pivot axis 12 into the direction of the turn being made. When the axle 15 moves relative to the chassis 11, the carrier member 31 pivots about its pivotal connection 32 with the chassis 11, as shown in Figures 6 and 8, swinging the third and fourth lower pivots 33, 34 and the connected dog-bone link members 35 toward the direction the turn is being made. Because of the configuration of the four pivots 33, 34, 36 and 37 associated with the two link members 35, the fifth and sixth upper pivots 36, 37 swing toward the direction of the turn in a parallel orientation to which they were centrally positioned. As a result, the vertical movement of the axle 15 relative to the chassis 11 is minimized during turns. The disclosed assembly 30 has been found to result in a lowered elevational change of the chassis 11 of approximately a quarter of an inch during turns, and during this minimal vertical movement, the chassis 11 remains in a parallel orientation with respect to its position prior to the turn.

The spherical ball joint 13 at the first pivot 12 accommodates any limited vertical movement of the axle 15 relative to the chassis 11 and allows oscillatory or lateral pitching movement of the axle 15 relative to the chassis 11 about the pivot 32. This oscillatory movement of the axle 15 can cause greater pivotal movement of the carrier member 31 about the pivot 32 than is shown in Figures 6 and 8. This particular configuration of components pivotally mounting the axle 15 to the chassis 11 for relative lateral movement results in a minimum of elevational changes for the chassis, irrespective of the movement of the axle 15, which in turn provides the ability to utilize front mounted attachments for the chassis 11 without affecting their operation during turns. Furthermore, the respective tie rods 28 are oriented such that the inwardly extending line of each of the tie rods 28 from the connection point 29 will intersect with the pivot axis extending between the pivot joint 32 and the center of the ball joint 13. This orientation of the tie rods 28 minimizes any steering effect to the wheels 17 whenever the axle 15 oscillates relative to the chassis 11.

The centering of all the pivot axes associated with the pivot joints 32, 33, 34, 36 and 37 at the center of the ball joint 13 allows the unrestricted pivotal movement of the carrier member 31 and the dog-bone link members 35 during the turning movements and for oscillatory or pitching movements as well, without requiring additional motion components to be accommodated during the relative movement of the axle 15 and the chassis 11. It will be understood by one skilled in the art that the specific orientation of these respective pivots 32, 33, 34, 36 and 37 requires the formation of a specially formed carrier member 31 and dog-bone members 35 to orient properly the respective pivots. Furthermore, the carrier member 31 has a somewhat arcuate shape to bow out around the dog-bone members 35 for their unrestricted movement between the carrier member 31 and the axle 15.

As best seen in Figures 1, 5-7, and 9, the opposing tie rods 28 are pivotally connected at chassis connection points 48 to a plate 47 detachably affixed to the chassis 11 by fasteners 49 in a manner centered on the longitudinal centerline C of the chassis 11 rearwardly of the axle 15. The chassis connection points 48 are offset laterally from the chassis centerline C and the pivot connection points 29 are formed as ball joints to accommodate universal movement of the tie rods 28. Any pivotal movement of the axle 15 relative to the chassis 11 will also be relative to the plate 47 which is detachably affixed to the chassis 11.

Since the interior chassis connection points 48 are fixed to the chassis 11, the stroking of the hydraulic cylinders 19 to pivotally rotate the opposing wheels 17 about their respective king pins 18 results in pivotal movement of the axle 15 about the pivot axis 12, in the manner described above, because of the fixed distance between the chassis connection point 48 and the corresponding pivot connection point 29 imposed by the respective tie rods 28. Accordingly, the tie rods 28 being fixed between the wheels 17 and the chassis 11 effect the relative pivotal movement between the axle 15 and the chassis 11 to improve the steering characteristics.

Referring specifically to the top plan views of the front axle assembly shown in Figures 5 and 6, one skilled in the art will readily see that the linear distance between the respective pivot connection points 29 for the tie rods 28, when the chassis is being directed in a straight longitudinal direction as depicted in Figure 5, is a given distance. The pivotal rotation of the axle 15 relative to the plate 47, as representatively depicted in Figure 6, results in a shortening of this linear distance between the respective pivot connection points 48.

This shortening of the linear distance between respective pivot connection points 29 can be visualized from the reference point of the axle 15 looking at the plate 47. From this orientation, the pivotal movement of the axle 15 about the pivot axis 12 appears to result in a rotation of the plate 47 and a corresponding relative toggling of the tie rods 28. This toggling of the tie rods 28 results in a physical shortening of the linear distance between the respective pivot connection points 29.

Looking then at the inside wheel 17a from the perspective of the outside wheel 17b during a turning movement, which as representatively depicted in Figure 6 would be to look at the right wheel 17a from the perspective of the left wheel 17b, this shortening of the linear distance between the respective pivot connection points 29 increases the relative pivotal movement of the inside wheel 17a to correct the oversteering problem. The amount of shortening of this linear distance between respective pivot connection points 29 is a function of the normal linear distance between the pivot connection points 29 and the distance the chassis connection points 48 are offset from the longitudinal centerline C of the chassis. One skilled in the art would readily realize that the placement of the chassis connection points 48 on the longitudinal centerline C would result in no shortening of the linear distance between the pivot connection points 29 as the axle 15 pivots relative to the chassis 11.

The amount of offset of the chassis connection points 48 from the longitudinal centerline C of the chassis 11 needs to be carefully chosen to result in the proper amount of differential pivotal movement of the wheels 17 as the axle 15 rotates about the pivot 12 to keep the turn centers of the respective wheels 17a, 17b coincidental, thereby correcting oversteering problems automatically as the vehicle executes a turning movement. It is anticipated that some operators may want to use the operational advantages of the compound steering mechanism 10 in some circumstances, but would prefer to use a conventional automotive-type steering mechanism in other situations.

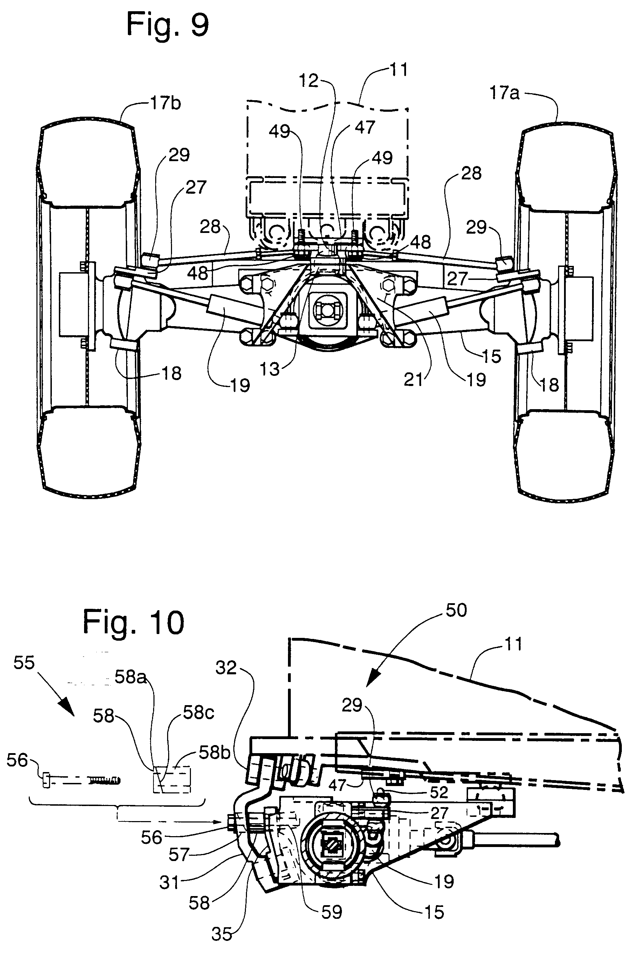

Referring now to Figures 10 - 12, the lock-out apparatus 50, which when installed will convert the compound steering mechanism 10 into a conventionally operating steering mechanism, can best be seen. The lock-out apparatus 50 comprises a single tie rod 52 and a lock-out bolt assembly 55, which when installed as described in greater detail below will prevent relative pivotal movement between the axle 15 and the chassis 11.

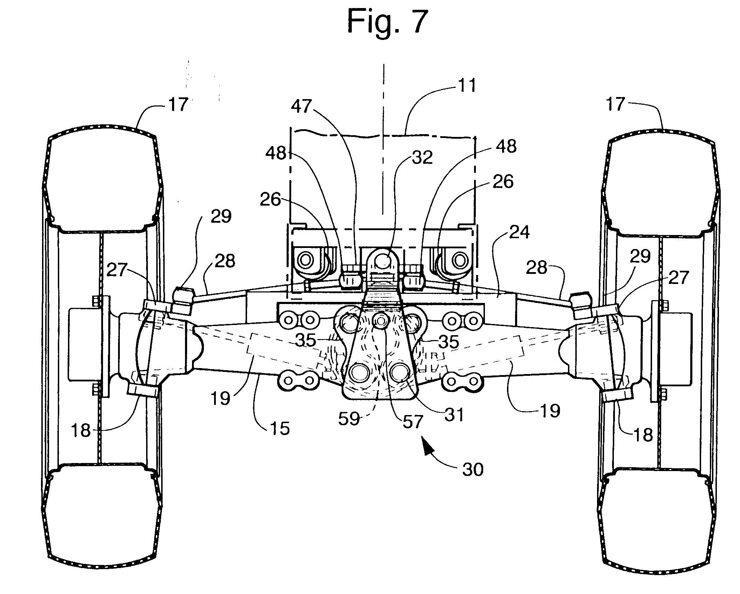

The lock-out bolt assembly 55 includes a fastener 56 and a split hub 58. The hub 58 is split into two halves 58a, 58b which mate along a diagonal line. The outer circumference of the hub 58 is slightly smaller than the inner circumference of a longitudinally extending opening 57 through the carrier member 31, which is alignable with a threaded hole 59 in the axle 15 when the axle 15 is perpendicular to the longitudinal centerline C of the chassis 11 and corresponds to a straight ahead direction of travel. The opening 57 and hole 59 and the alignment therebetween can be seen in a comparison of Figures 7 and 8.

The fastener 56 is insertable through the split hub 58, which has a length to extend between the opening 57 in the carrier 31 and the hole 59 in the axle 15, while the fastener 56 can be threaded into the hole 59. If an appropriate boss is not formed in the uniquely shaped carrier member 31, a tapered washer (not shown) would have to be provided to secure a uniform clamping load on the carrier member 31. When the hub 58 is positioned in the carrier member 31 and in the axle 15 with the diagonal mating faces 58c aligned, the threaded fastener 56 can be inserted therethrough and threaded into the hole 59 to exert a clamping load on the split hub 58, which will cam along the diagonal mating surface 58c to fill the opening 57 and firmly lock the carrier member 31 into a fixed position relative to the axle 15. As a result, the front yoke assembly 30, forming the linkage pivotally connecting the axle 15 to the chassis 11, cannot pivotally move to effect a steering movement of the axle 15 about the vertical pivot axis 12.

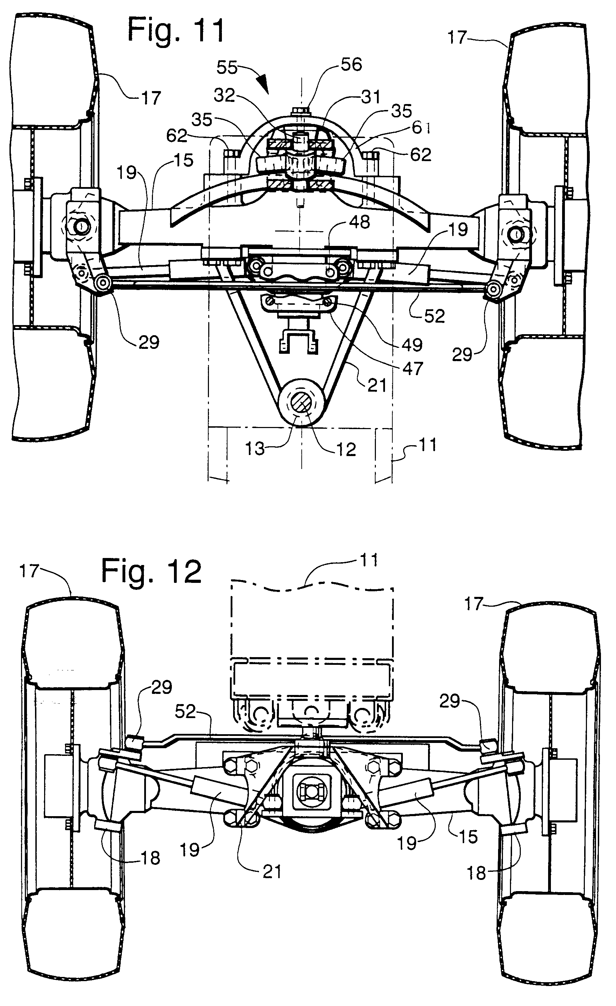

An alternative embodiment of the lock-out apparatus 50 is depicted in Figure 11. Instead of the lock-out bolt assembly 55, as described relative to the exploded view of Figure 10, the fastener 56 attaches a U-shaped bracket 61 to the front carrier member 31, while additional fasteners 62 connect the bracket 61 to the axle 15. As a result, the front carrier member 31 is again prevented from pivotal movement relative to the axle 15, thereby preventing pivotal movement of the axle 15 relative to the chassis 11, which is essential to the conversion of the compound steering mechanism 10 into a conventionally operating steering mechanism.

To complete the conversion of the compound steering mechanism 10 to a conventionally operating steering mechanism, the dual tie rods 28 interconnecting the chassis 11 and the steering arms 27 of the respective wheels must be replaced with a single conventional tie rod 52 spanning the linear distance between the respective pivot connection points 29. This conversion can be fairly easily accomplished by removing the fasteners 49 fixing the plate 47 to the chassis 11, or just disconnecting the chassis connection points 48 from the plate 47, disconnecting the remote ends of the tie rods 28 at the pivot connection points 29, and replacing the pivot connection points 29 to fasten the single tie rod 52 therebetween.

As best seen in Figures 11 and 12, the pivotal movement of the wheels 17 actuated by the operation of the hydraulic cylinders 19 and the cross-connection of the single tie rod 52 cannot effect any relative pivotal movement between the axle 15 and the chassis 11 because there is no action urging such a motion and, furthermore, the locking of the carrier member 31 to the axle 15 prevents any lateral shifting of the axle 15 relative to the chassis 11. Therefore, the only steering action must come from a conventional turning of the wheels 17 relative to the axle 15. Since the king pins 18 and steering arms 27 are oriented in a conventional manner, the oversteering problem is conventionally corrected. A simple removal of the lock-out bolt assembly 55 and a replacement of the single tie rod 52 with the plate 47 and attached dual tie rods 28 returns the axle assembly 10 to a compound steering mechanism.

It will be understood that changes in the details, materials, steps and arrangements of parts which have been described and illustrated to explain the nature of the invention will occur to and may be made by those skilled in the art upon a reading of this disclosure within the principles and scope of the invention. The foregoing description illustrates the preferred embodiment of the invention; however, concepts, as based upon the description, may be employed in other embodiments without departing from the scope of the invention, such as defined in the claims.

## Claims

1. A method of converting a steering mechanism from a compound steering mechanism, in which an axle (15) mounting a pair of opposing steerable wheels (17) is laterally movable relative to a chassis (11) from which said axle (15) is supported by a pivotable linkage (30) in response to a pivoting of the steerable wheels (17) which are operatively connected to said chassis (11), to a conventionally operating steering mechanism, in which the steering of said chassis (11) is accomplished solely through the pivotal movement of said wheels (17) relative to said axle (15);
the method being characterized in that it comprises the steps of:
- locking said axle (15) against the chassis (11) to prevent relative pivotal movement therebetween; and
- removing the operative connection (28) between said wheels (17) and said chassis (11) to eliminate the actuation of the pivotal movement of said axle (15) relative to said chassis (11).

2. A method according to claim 1 characterized in that said locking step includes the step of:
- restraining said linkage (30) from pivoting relative to said axle (15).

3. A method according to claim 2 characterized in that said restraining step includes the steps of:
- installing a hub (58) between said linkage (30) and said axle (15); and
- inserting a fastener (56) through said hub (58) to clamp said linkage (30) to said axle (15).

4. A method according to claim 3 characterized in that said installing step includes the steps of:
- positioning a first split hub half (58b) having a first diagonal mating face (58c) into said linkage (30); and
- positioning a second split hub half (58a) having a second diagonal mating face (58c) in said linkage with said second mating face (58c) being oriented in a mating fashion against said first mating face (58c).

5. A method according to claim 4 characterized in that said inserting step further includes the step of:
- threading said fastener (56) into said axle (15) to draw said first and second split hub halves (58a, 58b) together along said mating faces (58c).

6. A method according to claim 2 characterized in that said restraining step includes the step of:
- detachably connecting a bracket (61) to said linkage (30) and to said axle (15) to prevent relative pivotal movement therebetween.

7. A method according to claim 1 characterized in that said removing step includes the step of:
- replacing a connecting linkage (28) between said wheels (17) and said chassis (11) causing a pivotal movement of said axle (15) upon a corresponding pivotal movement of said wheels (17) with a tie rod (52) directly interconnecting said opposing wheels (17).

8. A vehicle including a chassis (11) having :
- a transversely extending steerable axle (15) pivotally mounted to said chassis (11) for lateral movement relative to said chassis (11) about a generally vertically extending axis (12);
- a linkage (30) pivotally supporting said steerable axle (15) from said chassis (11);
- a pair of opposing steerable wheels (17) pivotally connected to the respective transverse ends of said steerable axle (15);
- steering means operatively connected to said steerable wheels (17) to control the pivotal movement thereof relative to said steerable axle (15); and
- connecting link means (28) operatively associated with said steerable wheels (17) to effect a lateral shifting of said steerable axle (15) in response to a pivotal movement of said steerable wheels (17); and
characterized in that the vehicle further includes a lock-out means (50) selectively engageable with said axle (15) to prevent any lateral shifting thereof relative to said chassis (11); said lock-out means (50) comprising means (52) for enabling unrestricted selective pivotal movement of said steerable wheels (17) relative to said axle (15) to accomplish a steering operation of said vehicle.

9. A vehicle according to claim 8 characterized in that said lock-out means (50) further includes a lock-out bolt assembly (55) interengageable between said linkage (30) and said axle (15) to prevent pivotal movement of said linkage (30) associated with the lateral shifting of said steerable axle (15) relative to said chassis (11).

10. A vehicle according to claim 9 characterized in that said lock-out bolt assembly (55) comprises:
- a split hub (58) having first and second halves (58a, 58b) provided with diagonal mating faces (58c); and
- a fastener (56) insertable through said split hub halves (58a, 58b) to extend between said linkage (30) and said axle (15) and prevent any pivotal motion therebetween; said fastener (56) being threadable into said steerable axle (15) to exert a clamping load on said split hub (58) and effect a movement therebetween along said diagonal mating faces (58c) to securely fix said linkage (30) to said axle (15).

11. A vehicle according to any of the claims 8 to 10 characterized in that said means (52) for enabling unrestricted selective pivotal movement of said steerable wheels (17) relative to said axle (15) includes a tie rod (52) interengageable between said opposing steerable wheels (17) to effect simultaneous movement therebetween; said tie rod (52) being a replacement for said connecting link means (28).

12. A vehicle according to claim 8 characterized in that said lock-out means (50) includes a bracket (61) detachably connected to said linkage (30) and to said axle (15) to prevent pivotal movement of said linkage (30) associated with the lateral shifting of said steerable axle (15) relative to said chassis (11).

13. A vehicle according to any of the claims 8 to 12 characterized in that the chassis (11) has a generally longitudinally extending centerline (C) and the connecting link means (28) further comprises tying means (28) interconnecting said chassis (11) and each of said steerable wheels (17) for effecting a lateral shifting of said chassis (11) relative to said steerable axle (15) upon the pivotal movement of said steerable wheels (17) relative to said steerable axle (15) and for effecting a difference in the pivotal movement of one steerable wheel (17) relative to the other steerable wheel (17).

14. A vehicle according to claim 13 characterized in that said tying means (28) includes a tie rod (28) interconnecting said chassis (11) and each of said steerable wheels (17).

15. A vehicle according to claim 14 characterized in that each said tie rod (28) has a first end pivotally connected to said chassis (11) at a chassis pivot point (48) spaced transversely from said longitudinally extending centerline (C) and a second end pivotally connected to the respective steerable wheel (17) at a steering arm connection point (29) spaced remotely from a corresponding wheel pivot axis (18).

16. A vehicle according to claim 15 characterized in that the distance between the respective said steering arm connection points (29) decreases as said steerable axle (15) moves laterally relative to said chassis (11), thereby effecting a difference in the pivotal movement of one steerable wheel (17) relative to the other steerable wheel (17).

17. A vehicle according to claim 16 characterized in that said chassis (11) includes a detachable plate (47) affixed thereto along said longitudinally extending centerline (C), both of said chassis pivot points (48) being carried by said detachable plate (47).

18. A vehicle according to claim 17 characterized in that all of said chassis pivot points (48) and said steering arm connection points (29) comprise ball joints to accommodate transverse pitching motion of said steerable axle (15) relative to said chassis (11).

## Patentansprüche

1. Verfahren zur Umwandlung eines Lenkmechanismus von einem Verbund-Lenkmechanismus, bei dem die zwei entgegengesetzt angeordnete lenkbare Räder (17) befestigende Achse (15) seitlich gegenüber einem Fahrgestell (11), an dem die Achse (15) durch ein schwenkbares Gestänge (30) gehaltert ist, in Abhängigkeit von einem Verschwenken der lenkbaren Räder beweglich ist, die betriebsmäßig mit dem Fahrgestell (11) verbunden sind, in einen in üblicher Weise arbeitenden Lenkmechanismus, bei dem das Lenken des Fahrgestells (11) ausschließlich durch die Schwenkbewegung der Räder (17) gegenüber der Achse (15) erreicht wird,
wobei das Verfahren dadurch gekennzeichnet ist, daß es die folgenden Schritte umfaßt:
- Verriegeln der Achse (15) gegenüber dem Fahrgestell (11), um eine relative Schwenkbewegung zwischen diesen Teilen zu verhindern, und
- Entfernen der betriebsmäßigen Verbindung (28) zwischen den Rädern (17) und dem Fahrgestell (11), um die Betätigung der Schwenkbewegung der Achse (15) gegenüber dem Fahrgestell (11) aufzuheben.

2. Verfahren nach Anspruch 1,
dadurch gekennzeichnet, daß der Verriegelungsschritt den Schritt des:
- Festhaltens des Gestänges (30) gegen ein Verschwenken gegenüber der Achse (15) einschließt.

3. Verfahren nach Anspruch 2,
dadurch gekennzeichnet, daß der Festhalteschritt die folgenden Schritte einschließt:
- Installieren einer Nabe (58) zwischen dem Gestänge (30) und der Achse (15), und
- Einsetzen eines Befestigungsmittels (56) durch die Nabe (58), um das Gestänge (30) an der Achse (15) festzuklemmen.

4. Verfahren nach Anspruch 3,
dadurch gekennzeichnet, daß der Installationsschritt die folgenden Schritte einschließt:
- Anordnen einer ersten geteilten Nabenhälfte (58b) mit einer ersten diagonalen Paßfläche (58c) in dem Gestänge (30), und
- Anordnen einer zweiten geteilten Nabenhälfte (58a) mit einer zweiten diagonalen Paßfläche (58c) in dem Gestänge, wobei die zweite Paßfläche (58c) in einer zusammenpassenden Weise gegen die erste Paßfläche (58c) ausgerichtet ist.

5. Verfahren nach Anspruch 4,
dadurch gekennzeichnet, daß der Schritt des Einsetzens weiterhin den Schritt des:
- Einschraubens des Befestigungsmittels (56) in die Achse (15) zum Zusammenziehen der ersten und zweiten geteilten Nabenhälften (58a, 58b) entlang der Paßflächen (58c) gegeneinander einschließt.

6. Verfahren nach Anspruch 2,
dadurch gekennzeichnet, daß der Festhalteschritt den Schritt des:
- lösbaren Verbindens eines Haltebügels (61) an dem Gestänge (30) und an der Achse (15) zum Verhindern einer Relativ-Schwenkbewegung zwischen diesen Teilen einschließt.

7. Verfahren nach Anspruch 1,
dadurch gekennzeichnet, daß der Schritt des Entfernens den Schritt des:
- Ersetzens eines Verbindungsgestänges (28) zwischen den Rädern (17) und dem Fahrgestell (11), das eine Schenkbeegung der Achse (15) bei einer entsprechenden Schwenkbewegung der Räder (17) hervorruft, durch eine Spurstange (52) einschließt, die direkt die entgegengesetzt angeordneten Räder (17) miteinander verbindet.

8. Fahrzeug mit einem Fahrgestell (11) mit:
- einer sich in Querrichtung erstreckenden lenkbaren Achse (15), die schwenkbar an dem Fahrgestell (11) für eine seitliche Bewegung gegenüber dem Fahrgestell (11) um eine sich allgemein vertikal erstreckende Achse (12) befestigt ist,
- einem Gestänge (30), das die lenkbare Achse (15) schwenkbar an dem Fahrgestell (11) haltert,
- zwei entgegengesetzt angeordneten Rädern (17), die schwenkbar mit den jeweiligen Querenden der lenkbaren Achse (15) verbunden sind,
- Lenkeinrichtungen, die betriebsmäßig mit den lenkbaren Rädern (17) verbunden sind, um deren Schwenkbewegung gegenüber der lenkbaren Achse (15) zu steuern, und
- Verbindungsgestängeeinrichtungen (28), die betriebsmäßig den lenkbaren Rädern (17) zugeordnet sind, um eine seitliche Verschiebung der lenkbaren Achse (15) in Abhängigkeit von einer Schwenkbewegung der lenkbaren Räder (17) zu bewirken, dadurch gekennzeichnet, daß das Fahrzeug weiterhin eine Sperrvorrichtung (50) einschließt, die selektiv mit der Achse (15) in Eingriff bringbar ist, um jede seitliche Verschiebung der Achse gegenüber dem Fahrgestell (11) zu verhindern, wobei die Sperrvorrichtung (15) Einrichtungen (52) aufweist, die eine unbeschränkte selektive Schwenkbewegung der lenkbaren Räder (17) gegenüber der Achse (15) ermöglichen, um einen Lenkvorgang des Fahrzeuges durchzuführen.

9. Fahrzeug nach Anspruch 8,
dadurch gekennzeichnet, daß die Sperrvorrichtung (50) weiterhin eine Sperrbolzenbaugruppe (55) einschließt, die zwischen dem Gestänge (30) und der Achse (50) in Eingriff bringbar ist, um eine Schwenkbewegung des Gestänges (30) zu verhindern, die mit der seitlichen Verschiebung der lenkbaren Achse (15) gegenüber dem Fahrgestell (11) in Beziehung steht.

10. Fahrzeug nach Anspruch 9,
dadurch gekennzeichnet, daß die Sperrbolzenbaugruppe (55) folgende Teile umfaßt:
- eine geteilte Nabe (58) mit ersten und zweiten Hälften (58a, 58b), die mit diagonalen Paßflächen (58c) versehen sind, und
- ein Befestigungsmittel (56), das durch die geteilten Nabenhälften (58a, 58b) hindurch einsetzbar ist, um sich zwischen dem Gestänge (30) und der Achse (15) zu erstrecken und jede Schwenkbewegung zwischen diesen Teilen zu verhindern, wobei das Befestigungsmmittel (56) in die lenkbare Achse (15) einschraubbar ist, um eine Klemmlast auf die geteilte Nabe (58) auszuüben und eine Bewegung in dieser entlang der diagonalen Paßflächen (58c) zu bewirken, um das Gestänge (30) sicher an der Achse (15) festzulegen.

11. Fahrzeug nach einem der Ansprüche 8 bis 10,
dadurch gekennzeichnet, daß die Einrichtung (52), die eine unbeschränkte selektive Schwenkbewegung der lenkbaren Räder (15) gegenüber der Achse (15) ermöglicht, eine Spurstange (52) einschließt, die zwischen den gegenüberliegenden lenkbaren Rädern (17) in Eingriff bringbar ist, um eine gleichzeitige Bewegung dieser Räder zu bewirken, wobei die Spurstange (52) ein Ersatz für die Verbindungsstangeneinrichtungen (28) ist.

12. Fahrzeug nach Anspruch 8,
dadurch gekennzeichnet, daß die Sperrvorrichtung (15) einen Haltebügel (61) einschließt, der lösbar mit dem Gestänge (30) und mit der Achse (15) verbunden ist, um eine Schwenkbewegung des Gestänges (30) zu verhindern, die der seitlichen Verschiebund der lenkbaren Achse (15) gegenüber dem Fahrgestell (11) zugeordnet ist.

13. Fahrzeug nach einem der Ansprüche 8 bis 12,
dadurch gekennzeichnet, daß das Fahrgestell eine sich allgemein in Längsrichtung erstreckende Mittellinie (C) aufweist und die Verbindungsstangeneinrichtung (28) weiterhin Verbindungseinrichtungen (28) umfaßt, die das Fahrgestell (11) und jedes der lenkbaren Räder (17) verbinden, um eine seitliche Verschiebung des Fahrgestells (11) gegenüber der lenkbaren Achse (15) bei der Schwenkbewegung der lenkbaren Räder (17) gegenüber der lenkbaren Achse (15) zu bewirken und um einen Unterschied hinsichtlich der Schwenkbewegung eines lenkbaren Rades (17) gegenüber dem anderen lenkbaren Rad (17) zu bewirken.

14. Fahrzeug nach Anspruch 13,
dadurch gekennzeichnet, daß die Verbindungseinrichtung (28) eine Spurstange (28) einschließt, die das Fahrgestell (11) und jedes der lenkbaren Räder (17) miteinander verbindet.

15. Fahrzeug nach Anspruch 14,
dadurch gekennzeichnet, daß jede Spurstange (28) ein erstes Ende, das schwenkbar an dem Fahrgestell (11) an einem Fahrgestell-Schwenkpunkt (48) befestigt ist, der in Querabstand von der sich in Längsrichtung erstreckenden Mittellinie (C) angeordnet ist, und ein zweites Ende aufweist, das schwenkbar mit dem jeweiligen lenkbaren Rad (17) an einem Lenkarm-Verbindungspunkt (29) angeschlossen ist, der in Abstand von der entsprechenden Rad-Schwenkachse (18) angeordnet ist.

16. Fahrzeug nach Anspruch 15,
dadurch gekennzeichnet, daß der Abstand zwischen den jeweiligen Lenkarm-Anschlußpunkten (29) abnimmt, wenn sich die lenkbare Achse (15) seitlich gegenüber dem Fahrgestell (11) bewegt, wodurch ein Unterschied in der Schwenkbewegung eines lenkbaren Rades (17) gegenüber dem anderen lenkbaren Rad (17) hervorgerufen wird.

17. Fahrzeug nach Anspruch 16,
dadurch gekennzeichnet, daß das Fahrgestell (11) eine lösbare Platte (47) einschließt, die an diesem entlang der sich in Längsrichtung erstreckenden Mittellinie (C) befestigt ist, wobei beide Fahrgestell-Schwenkpunkte (48) von dieser lösbaren Platte (47) getragen werden.

18. Fahrzeug nach Anspruch 17,
dadurch gekennzeichnet, daß alle Fahrgestell-Schwenkpunkte (48) und die Lenkarm-Verbindungspunkte (29) durch Kugelgelenke gebildet sind, um eine quergerichtete Nickbewegung der lenkbaren Achse (15) gegenüber dem Fahrgestell (11) aufzunehmen.

## Revendications

1. Méthode pour convertir un mécanisme de direction à partir d'un mécanisme de direction mixte, dans lequel un essieu (15) supportant une paire de roues directrices opposées (17) est déboîtable latéralement par rapport à un châssis (11), à partir duquel ledit essieu (15) est soutenu par une liaison pivotante (30), en réponse à un pivotement des roues directrices (17) qui sont reliées fonctionnellement audit châssis (11), vers un mécanisme de direction à fonctionnement conventionnel, dans lequel le braquage dudit châssis (11) est réalisé uniquement à partir du mouvement de pivotement desdites roues (17) par rapport audit essieu (15) ;
ladite méthode étant caractérisée en ce qu'elle comprend les étapes:
- de blocage dudit essieu (15) par rapport au châssis (11) pour éviter un mouvement de pivotement relatif entre eux; et
- d'enlèvement de la liaison fonctionnelle (28) entre lesdites roues (17) et ledit châssis (11) pour supprimer l'activation du mouvement de pivotement dudit essieu (15) par rapport audit châssis (11).

2. Méthode selon la revendication 1, caractérisée en ce que ladite étape de blocage comprend l'étape:
- d'empêchement de ladite liaison (30) de pivoter par rapport audit essieu (15).

3. Méthode selon la revendication 2, caractérisée en ce que ladite étape d'empêchement comprend les étapes:
- d'installation d'un moyeu (58) entre ladite liaison (30) et ledit essieu (15); et
- d'introduction d'un élément de fixation (56) au travers dudit moyeu (58) pour fixer ladite liaison (30) audit essieu (15).

4. Méthode selon la revendication 3, caractérisée en ce que ladite étape d'installation comprend les étapes:
- de positionnement d'une première moitié de moyeu scindé (58b) possédant une première face diagonale d'accouplement (58c) à l'intérieur de ladite liaison (30); et
- de positionnement d'une seconde moitié de moyeu scindé (58a), possédant une seconde face diagonale d'accouplement (58c), dans ladite liaison avec ladite seconde face d'accouplement (58c) orientée de manière à s'accoupler contre ladite première face d'accouplement (58c).

5. Méthode selon la revendication 4, caractérisée en ce que ladite étape d'introduction comprend en outre l'étape de:
- vissage dudit élément de fixation (56) à l'intérieur dudit essieu (15) pour caler ladite première et ladite seconde moitiés de moyeu (58a, 58b) ensemble selon lesdites faces d'accouplement (58c).

6. Méthode selon la revendication 2, caractérisée en ce que ladite étape d'empêchement comprend l'étape:
- d'adaptation amovible d'un étrier (61) à ladite liaison (30) et audit essieu (15) pour éviter un pivotement relatif entre ceux-ci.

7. Méthode selon la revendication 1, caractérisée en ce que l'étape d'enlèvement comprend l'étape de:
- remplacement des liaisons de raccordement (28) entre lesdites roues (17) et ledit châssis (11), qui entraînent un mouvement de pivotement dudit essieu (15) avec un pivotement correspondant desdites roues (17), par une barre d'accouplement (52) reliant directement lesdites roues opposées (17).

8. Véhicule comprenant un châssis (11) possédant:
- un essieu transversal de direction (15) monté avec pivotement audit châssis (11) pour permettre un mouvement latéral par rapport audit châssis (11) selon un axe généralement vertical (12);
- une liaison (30) soutenant par pivotement ledit essieu directionnel (15) à partir dudit châssis (11);
- une paire de roues directrices opposées (17), reliées aux extrémités transversales respectives dudit essieu de direction (15);
- des moyens de braquage reliés fonctionnellement auxdites roues directrices (17) pour commander leur mouvement de pivotement par rapport audit essieu de direction (15); et
- un moyen de barre d'accouplement (28) associé fonctionnellement auxdites roues directrices (17) pour effectuer un déboîtement latéral dudit essieu de direction (15) en réponse à un mouvement de pivotement desdites roues directrices (17); et
caractérisé en ce que le véhicule comprend en outre un moyen de blocage (50) introductible sélectivement audit essieu (15) pour éviter tout déboîtement latéral de celui-ci par rapport audit châssis (11); ledit moyen de blocage (50) comprenant des moyens (52) pour permettre un mouvement de pivotement sélectif libre desdites roues directrices (17) par rapport audit essieu (15) afin d'effectuer une opération de braquage dudit véhicule.

9. Véhicule selon la revendication 8, caractérisé en ce que lesdits moyens de blocage (50) comprennent en outre un assemblage à boulon de blocage (55) insérable entre ladite liaison (30) et ledit essieu (15) pour éviter le pivotement de ladite liaison (30) associée au déboîtement latéral dudit essieu de direction (15) par rapport audit châssis (11).

10. Véhicule selon la revendication 9, caractérisé en ce que ledit assemblage à boulon de blocage (55) comprend:
- un moyeu scindé (58) possédant une première et une seconde moitiés (58a, 58b) disposant de faces diagonales d'accouplement (58c); et
- un élément de fixation (56) introductible au travers desdites moitiés de moyeu scindé (58a, 58b) pour se prolonger entre ladite liaison (30) et ledit essieu (15) et éviter tout mouvement de pivotement entre eux; ledit élément de fixation (56) étant vissable dans ledit essieu de direction (15) pour exercer une charge de serrage sur le moyeu scindé (58) et réaliser un mouvement intermédiaire selon lesdites faces diagonales d'accouplement (58c) afin d'assurer la fixation de ladite liaison (30) audit essieu (15).

11. Véhicule selon l'une quelconque des revendications 8 à 10, caractérisé en ce que ledit moyen (52) pour permettre un pivotement sélectif libre desdites roues directrices (17) par rapport audit essieu (15) comprend une barre d'accouplement (52) pouvant relier lesdites roues directrices opposées (17) pour réaliser un mouvement simultané entre elles; ladite barre d'accouplement (52) remplaçant lesdits moyens de liaison (28).

12. Véhicule selon la revendication 8, caractérisé en ce que ledit moyen de blocage (50) comprend un étrier (61) relié amoviblement à ladite liaison (30) et audit essieu (15) pour éviter un pivotement de ladite liaison (30) associée au déboîtement latéral dudit essieu de direction (15) par rapport audit châssis (11).

13. Véhicule selon l'une quelconque des revendications 8 à 12, caractérisé en ce que le châssis (11) possède un axe central d'extension généralement longitudinale (C), et les moyens de liaison (28) comprennent en outre des moyens de jonction (28) reliant ledit châssis (11) et chacune desdites roues directrices (17) pour réaliser un déboîtement latéral dudit châssis (11) par rapport audit essieu de direction (15) avec un pivotement desdites roues directrices (17) par rapport audit essieu de direction (15) et pour réaliser une différence de pivotement de l'une des roues directrices (17) par rapport à l'autre roue directrice (17).

14. Véhicule selon la revendication 13, caractérisé en ce que lesdits moyens de jonction (28) comprennent une barre d'accouplement (28) reliant ledit châssis (11) et chacune desdites roues directrices (17).

15. Véhicule selon la revendication 14, caractérisé en ce que chaque dite barre d'accouplement (28) possède une première extrémité, reliée par pivotement audit châssis (11) en un point de pivotement au châssis (48) écarté transversalement dudit axe à extension longitudinale (C), et une seconde extrémité, reliée par pivotement à la roue directrice respective (17) en un point de liaison d'un bras de direction (29) écarté de l'axe de pivotement (18) de la roue correspondante.

16. Véhicule selon la revendication 16, caractérisé en ce que la distance entre lesdits points de liaison respectifs des bras de direction (29) diminue lorsque l'essieu de direction (15) se déplace latéralement par rapport audit châssis (11), réalisant de cette manière une différence de pivotement d'une roue directrice (17) par rapport à l'autre roue directrice (17).

17. Véhicule selon la revendication 16, caractérisé en ce que ledit châssis (11) comprend une plaque amovible (47) qui lui est fixée le long dudit axe à extension longitudinale (C), les deux desdits points de pivotement au châssis (48) étant supportés par ladite plaque amovible (47).

18. Véhicule selon la revendication 17, caractérisé en ce que l'ensemble desdits points de pivotement au châssis (48) et desdits points de liaison des bras de direction (29) comprend des joints sphériques pour s'adapter au mouvement de tangage transversal dudit essieu de direction (15) par rapport audit châssis (11).
